# EUROPÄISCHE PATENTANMELDUNG

(11) **EP 4 400 812 A1**
(43) Veröffentlichungstag der Anmeldung: **17.07.2024**
(21) Anmeldenummer: 23214790.0
(22) Anmeldetag: 07.12.2023
(51) Int. Cl.: G01D 21/00, G06K 19/07, G01L 1/16, G01L 1/22

(54) **MESSVORRICHTUNG**

(30) Priorität: 12.01.2023 EP 23151270
(71) Anmelder: Kistler Holding AG, 8408 Winterthur (CH)
(72) Erfinder: Gerber, Christian, 8472 Seuzach (CH); Glardon, Mathieu, 8406 Winterthur (CH)

(57) **Zusammenfassung**

Die Erfindung betrifft eine Messvorrichtung (100) zum Messen einer physikalischen Grösse, welche eine Sensoranordnung (1) und eine Verstärkeranordnung (3) aufweist; die Sensoranordnung (1) erzeugt unter der Wirkung der zu messenden physikalischen Grösse ein Messsignal (M), welches Messsignal (M) über mindestens einen Signalleiter (11, 21, 31) an die Verstärkeranordnung (3) abgeleitet wird und von der Verstärkeranordnung (3) zu einem Messwert (V) verstärkt wird; welche Sensoranordnung (1) einen RFID-Transponder (13) aufweist, in welchem dauerhaft Daten (D) gespeichert sind; und welche Verstärkeranordnung (3) eine RFID-Schreib-/Lesevorrichtung (33) aufweist, welche ausgebildet ist, über den Signalleiter (11, 21, 31) Daten (D) in den RFID-Transponder (13) zu schreiben und aus dem RFID-Transponder (13) zu lesen; wobei der RFID-Transponder (13) über den Signalleiter (11, 21, 31) kapazitiv mit der RFID-Schreib-/Lesevorrichtung (33) gekoppelt ist; wobei hochfrequente elektrische Signale (HF) in den Signalleiter (11, 21, 31) eingespeist sind; und wobei die Daten (D) zur Übermittlung über den Signalleiter (11, 21, 31) den hochfrequenten elektrischen Signalen (HF) aufmoduliert sind.

## Beschreibung

### Technisches Gebiet

Die Erfindung betrifft eine Messvorrichtung nach dem Oberbegriff des unabhängigen Anspruchs.

### Stand der Technik

Solch eine Messanordnung wird in der Messtechnik vielfältig zum Messen einer physikalischen Grösse wie eines Drucks, einer Kraft, eines Moments, einer Beschleunigung, einer Temperatur, usw. angewendet.

Dazu offenbart die Schrift WO2016/210360A1 eine Messanordnung zum Messen einer Beschleunigung oder Kraft. Als Ausführungsbeispiel wird ein Integral Electronic Piezo Electric (IEPE) beschrieben, bei dem einer Sensoranordnung mit einem piezoelektrischen Sensorelement (PE-Sensorelement) eine Verstärkeranordnung nachgeschaltet ist. Für die zu messende Beschleunigung oder Kraft erzeugt das PE-Sensorelement Polarisationsladungen, welche von der Verstärkeranordnung in eine elektrische Spannung verstärkt werden. Die elektrische Spannung wird als Messwert an eine Auswerteanordnung abgeleitet. Der Messwert wird von der Auswerteanordnung ausgewertet.

Die Messanordnung der WO2016/210360A1 weist ein Transducer Electronic Data Sheet (TEDS) auf, in dem sensorspezifische Daten der Sensoranordnung wie eine Seriennummer, eine Typenbezeichnung, Daten zur Empfindlichkeit, Kalibrierdaten, usw. gespeichert sind. Das TEDS ist in der Norm IEEE 1451 standardisiert und lässt sich von der Auswerteanordnung beschreiben bzw. auslesen. Das Auslesen von sensorspezifischen Daten aus dem TEDS entlastet den Anwender von der manuellen Eingabe dieser Daten in die Auswerteanordnung und hilft ihm auch, bei einer grossen Anzahl von Messanordnungen die einzelnen Messanordnungen räumlich eindeutig zu identifizieren. Das TEDS erniedrigt die Anzahl der möglichen Fehlerquellen beim Messvorgang und erhöht die Genauigkeit des Messwerts.

Die Messanordnung der WO2016/210360A1 verwendet ein Zweileiter-Kabel, denn sowohl die Messanordnung als auch das TEDS benötigen ein Kabel mit mindestens zwei elektrischen Leitern, um das IEPE mit elektrischem Strom zu versorgen, um den Messwert abzuleiten und um auf das TEDS zu schreiben bzw. das TEDS auszulesen.

Nachteilig an der Verwendung eines Zweileiter-Kabels ist, dass der Messvorgang selbst, sowie das Schreiben bzw. Lesen des TEDS nicht gleichzeitig stattfinden können, denn der Messwert ist eine zeitlich variierende elektrische Spannung, welche der positiven elektrischen Stromversorgung des IEPE überlagert ist, während das TEDS mit negativen elektrischen Spannungspegeln beschrieben bzw. ausgelesen wird. Um eine Störung des Messvorgangs beim Schreiben bzw. Lesen des TEDS zu vermeiden, trennt die WO2016/210360A1 dann auch die positive elektrische Stromversorgung des IEPE und die negativen elektrischen Spannungspegel Schreiben bzw. Lesen des TEDS aufgrund ihrer unterschiedlichen Polarität über Dioden voneinander.

Die WO2016/210360A1 lehrt die Verwendung eines Radio-Frequency Identification (RFID) Transponders in der Messvorrichtung, welcher RFID Transponder über Nahfeldkommunikation mit einem Schreib-/Lesegerät in Funkverbindung steht. Der RFID Transponder ist über einen Mikroprozessor elektrisch mit dem TEDS verbunden. Somit kann ein Anwender das TEDS unabhängig vom Zweileiter-Kabel über Nahfeldkommunikation beschreiben und lesen.

Aufgabe der vorliegenden Erfindung ist es, eine Messanordnung bereitzustellen, welche über einen gegenüber einem TEDS verbesserten Datenspeicher verfügt.

### Darstellung der Erfindung

Diese Aufgabe wird durch die Merkmale des unabhängigen Anspruchs gelöst.

Die Erfindung betrifft eine Messvorrichtung zum Messen einer physikalischen Grösse, welche eine Sensoranordnung und eine Verstärkeranordnung aufweist; die Sensoranordnung erzeugt unter der Wirkung der zu messenden physikalischen Grösse ein Messsignal, welches Messsignal über mindestens einen Signalleiter an die Verstärkeranordnung abgeleitet wird und von der Verstärkeranordnung zu einem Messwert verstärkt wird; welche Sensoranordnung einen RFID-Transponder aufweist, in welchem dauerhaft Daten gespeichert sind; und welche Verstärkeranordnung eine RFID-Schreib-/Lesevorrichtung aufweist, welche ausgebildet ist, über den Signalleiter Daten in den RFID-Transponder zu schreiben und aus dem RFID-Transponder zu lesen; wobei der RFID-Transponder über den Signalleiter kapazitiv mit der RFID-Schreib-/Lesevorrichtung gekoppelt ist; wobei hochfrequente elektrische Signale in den Signalleiter eingespeist sind; und wobei die Daten zur Übermittlung über den Signalleiter den hochfrequenten elektrischen Signalen aufmoduliert sind.

Die Anmelderin hat herausgefunden, dass sich der RFID-Transponder in der Sensoranordnung über den Signalleiter mit der RFID-Schreib-/Lesevorrichtung in der Verstärkeranordnung kapazitiv koppeln lässt. Die kapazitive Kopplung erfolgt durch hochfrequente elektrische Signale. Hochfrequente elektrische Signale sind elektrische Signale mit einer Frequenz grösser/gleich 9kHz. Die RFID-Schreib-/Lesevorrichtung kann so Daten in den RFID-Transponder schreiben und aus dem RFID-Transponder lesen. Die Daten bleiben im RFID-Transponder dauerhaft gespeichert, wobei das Adjektiv "dauerhaft" die Bedeutung von "über den Zeitraum der Lebensdauer der Messvorrichtung hinweg" hat. Der RFID-Transponder ist somit ein vollwertiger Ersatz für das TEDS.

Im Vergleich mit einem TEDS weist der RFID-Transponder mehrere Vorteile auf. So ist der RFID-Transponder je nach Anbieter um einen Faktor von zwei bis vier kostengünstiger in der Anschaffung als ein TEDS. Und trotz des günstigeren Anschaffungspreises weist der RFID-Transponder aktuell eine um einen Faktor acht grössere Speicherkapazität als ein TEDS auf.

Weiter benötigt der RFID-Transponder aufgrund der kapazitiven Kopplung keine Antenne für eine Nahfeldkommunikation mit der RFID-Schreib-/Lesevorrichtung, was die Anschaffung zusätzlich vergünstigt.

Vorteilhafte Weiterbildungen der Messvorrichtung sind in den abhängigen Ansprüchen aufgeführt.

### Kurze Beschreibung der Zeichnungen

Im Folgenden wird die Erfindung beispielhaft unter Beizug der Figuren näher erklärt. Es zeigen
- Fig. 1: eine erste Ausführungsform einer Messvorrichtung 100 mit einer Sensoranordnung 1, welche ein PE-Sensorelement 10 aufweist und direkt mit einer Verstärkeranordnung 3 elektrisch verbunden ist;
- Fig. 2: eine zweite Ausführungsform einer Messvorrichtung 100 mit einer Sensoranordnung 1, welche ein PE-Sensorelement 10 aufweist und einer Kabelanordnung 2, welche die Sensoranordnung 1 mit einer Verstärkeranordnung 3 elektrisch verbindet;
- Fig. 3: eine dritte Ausführungsform einer Messvorrichtung 100 mit einer Sensoranordnung 1, welche eine DMS-Schaltungseinheit 10* aufweist und direkt mit einer Verstärkeranordnung 3 elektrisch verbunden ist; und
- Fig. 4: eine vierte Ausführungsform einer Messvorrichtung 100 mit einer Sensoranordnung 1, welche eine DMS-Schaltungseinheit 10* aufweist und einer Kabelanordnung 2, welche die Sensoranordnung mit einer Verstärkeranordnung 3 elektrisch verbindet.

Gleiche Bezugszeichen bezeichnen in den Figuren gleiche Gegenstände.

### Wege zur Ausführung der Erfindung

Die Messanordnung 100 dient dem Messen einer physikalischen Grösse wie eines Drucks, einer Kraft, eines Moments, einer Beschleunigung, einer Temperatur, usw.

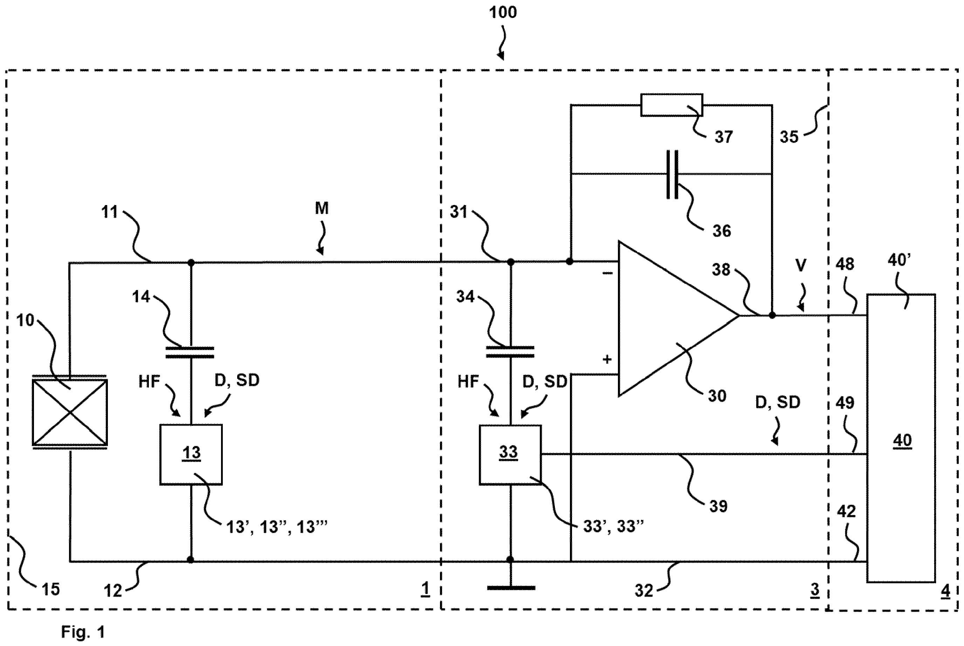

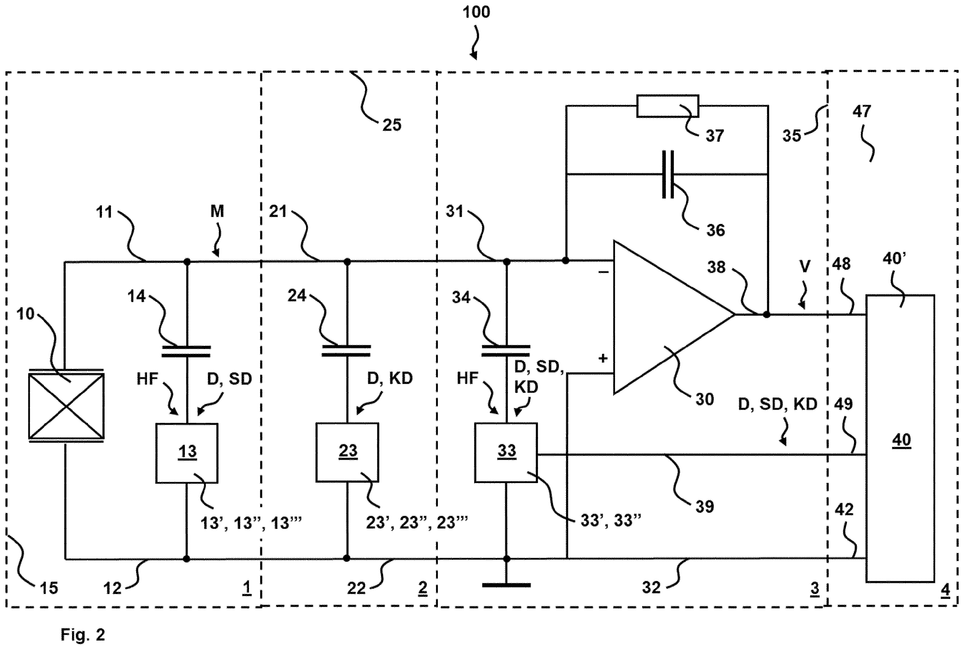

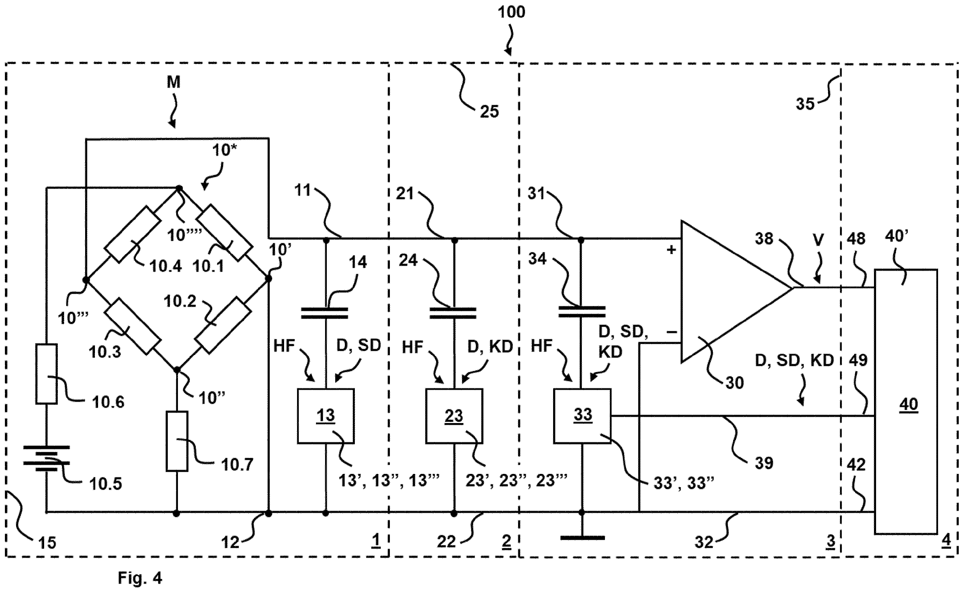

Gemäss den vier Ausführungsformen der Fig. 1 bis 4 weist die Messvorrichtung 100 als Bestandteile eine Sensoranordnung 1, eine Verstärkeranordnung 3 und eine Auswerteanordnung 4 auf. Gemäss den beiden Ausführungsformen der Fig. 2 und 4 weist die Messvorrichtung 100 zudem eine Kabelanordnung 2 auf.

Die Bestandteile der Messanordnung 100 können an einem Ort oder an mehreren Orten global angeordnet sein. Auch können sich die Bestandteile der Messanordnung 100 in einem einzigen Gehäuse oder in mehreren Gehäusen befinden.

### DIE SENSORANORDNUNG

Die Sensoranordnung 1 hat die Funktion, für die zu messende physikalische Grösse ein Messsignal M zu erzeugen. Die Sensoranordnung 1 weist ein Sensorgehäuse 15 auf. Das Sensorgehäuse 15 ist figürlich schematisch als gestricheltes Rechteck dargestellt. Die Gegenstände innerhalb des Sensorgehäuses 15 sind Bestandteil der Sensoranordnung 1. Das Sensorgehäuse 15 ist aus mechanisch beständigem Material wie Stahl, usw.

Gemäss den beiden Ausführungsformen der Fig. 1 und 2 weist die Sensoranordnung 1 ein PE-Sensorelement 10 auf. Das PE-Sensorelement 10 umfasst PE-Material wie Quarz, Galliumorthophosphat, usw., welches unter der Wirkung der zu messenden physikalischen Grösse Polarisationsladungen erzeugt. Typischerweise weist das PE-Sensorelement 10 eine Empfindlichkeit von mehreren pCN⁻¹ auf. Das PE-Sensorelement 10 weist Elektroden aus elektrisch leitendem Material wie Kupfer, Gold, usw. auf, welche die Polarisationsladungen von Oberflächen des PE-Material abgreifen. Die Anzahl der Polarisationsladungen ist proportional zur Grösse der physikalischen Grösse. Diese Polarisationsladungen sind das Messsignal M der Sensoranordnung 1.

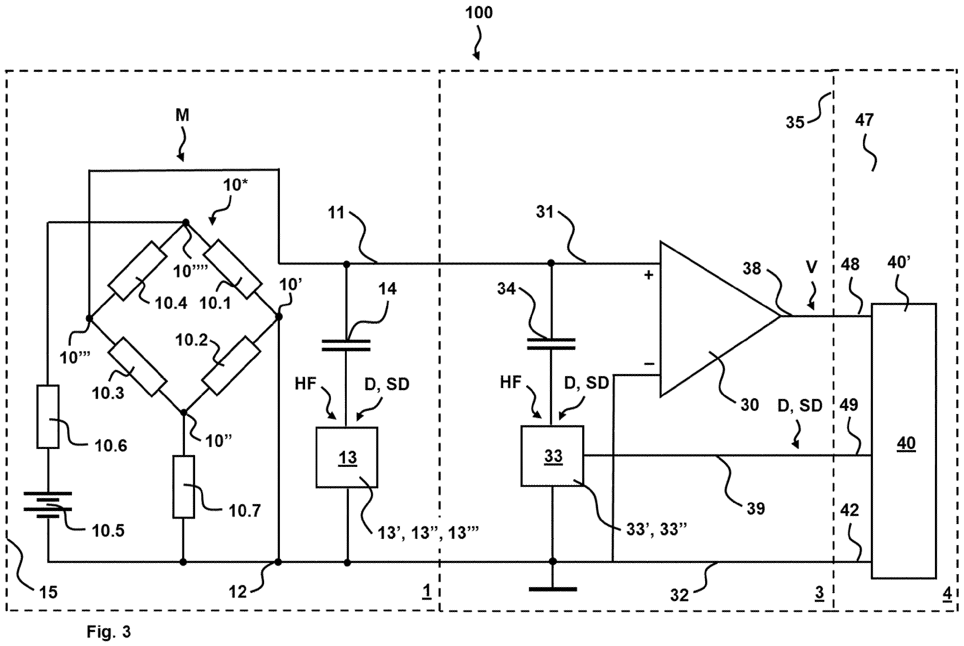

Gemäss den beiden Ausführungsformen der Fig. 3 und 4 weist die Sensoranordnung 1 eine Schaltungseinheit 10* mit Dehnungsmessstreifen (DMS) auf. Diese DMS-Schaltungseinheit 10* kann eine Vollbrücke, Halbbrücke oder Viertelbrücke sein. In den beiden Ausführungsformen gemäss Fig. 3 und 4 ist die DMS-Schaltungseinheit 10* eine Vollbrücke mit einem ersten DMS 10.1, einem zweiten DMS 10.2, einem dritten DMS 10.3 und einem vierten DMS 10.4. Der erste DMS 10.1 und der zweite DMS 10.2 sind über einen ersten Knoten 10' elektrisch verbunden. Der zweite DMS 10.2 und der dritte DMS 10.3 sind über einen zweiten Knoten 10" elektrisch verbunden. Der dritte DMS 10.3 und der vierte DMS 10.4 sind über einen dritten Knoten 10‴ elektrisch verbunden. Und der vierte DMS 10.4 und der erste DMS 10.1 sind über einen vierten Knoten 10ʺʺ elektrisch verbunden. Die Sensoranordnung 1 weist eine DMS-Spannungsversorgungseinheit 10.5 auf, welche eine elektrische Gleichspannung an den zweiten und vierten Knoten 10'', 10ʺʺ legt. Die Sensoranordnung 1 kann einen ersten DMS-Ausgleichswiderstand 10.6 und einen zweiten DMS-Ausgleichswiderstand 10.7 aufweisen, welcher erste DMS-Ausgleichswiderstand 10.6 mit dem vierten Knoten 10'''' elektrisch verbunden ist und welcher zweite DMS-Ausgleichswiderstand 10.6 mit dem zweiten Knoten 10" elektrisch verbunden ist. Die zu messende physikalische Grösse dehnt die DMS-Schaltungseinheit 10*, dadurch ändert sich ein elektrischer Widerstand der DMS-Schaltungseinheit 10*. Diese elektrische Spannung ist zwischen dem ersten und dritten Knoten 10', 10‴ abgreifbar und bildet das Messsignal M der Sensoranordnung 1.

Die Sensoranordnung 1 weist einen ersten Signalleiter 11 und einen ersten Masseleiter 12 auf. Der erste Signalleiter 11 und der erste Masseleiter 12 sind aus elektrisch leitendem Material wie Kupfer, Stahl, usw. Der erste Signalleiter 11 leitet das Messsignal M innerhalb des Sensorgehäuses 15 ab. Für ein möglichst verlustfreies Ableiten des Messsignals M ist der erste Signalleiter 11 hochohmig elektrisch isoliert. Vorzugsweise ist der elektrische Isolationswiderstand des ersten Signalleiters 11 bei 25°C grösser 10¹³Ω. Der erste Masseleiter 12 liegt auf dem elektrischen Bezugspotenzial der Messvorrichtung 100. Im Regelfall ist das elektrische Bezugspotenzial eine elektrische Spannung von 0V.

Die Sensoranordnung 1 weist einen RFID-Transponder 13 auf. Der RFID-Transponder 13 ist mit dem ersten Signalleiter 11 und mit dem ersten Masseleiter 12 elektrisch verbunden. Der RFID-Transponder 13 weist einen Datenspeicher 13' auf. Aktuell kann der Datenspeicher 13' eine Speicherkapazität von 8kByte haben. Die technische Entwicklung geht aber zu grösseren Speicherkapazitäten, so dass die Speicherkapazität in einigen Jahren ein Mehrfaches von 8kByte sein wird.

Im Datenspeicher 13' des RFID-Transponders 13 sind dauerhaft Daten D als sensorspezifische Daten SD der Sensoranordnung 1 gespeichert. Die sensorspezifischen Daten SD umfassen mindestens eines der folgenden Datenelemente:
- ein Datenelement zur Seriennummer der Sensoranordnung 1;
- ein Datenelement zur Typenbezeichnung der Sensoranordnung 1;
- ein Datenelement zu mindestens einem Messbereich, in dem die Sensoranordnung 1 die physikalische Grösse misst;
- ein Datenelement zur Empfindlichkeit, mit der die Sensoranordnung 1 die physikalische Grösse im mindestens einen Messbereich misst;
- ein Datenelement zur Linearitätsabweichung einschliesslich der Hysterese, mit welcher die Sensoranordnung 1 die physikalische Grösse misst; und
- ein Datenelement zum Kalibrieren der Sensoranordnung 1, wo für den mindestens einen Messbereich die dort herrschende kleinste Messungenauigkeit dokumentiert ist.

Der RFID-Transponder 13 weist einen Energiespeicher 13'' auf, welcher hochfrequente elektrische Signale HF als elektrische Energie speichern kann. Der Energiespeicher 13" ist mit dem ersten Signalleiter 11 elektrisch verbunden. Hochfrequente elektrische Signale HF, welche in den ersten Signalleiter 11 eingespeist sind, können kapazitiv in den Energiespeicher 13" koppeln. Im nicht geladenen Zustand stellt der Energiespeicher 13" eine mittelhochohmige Last mit einem elektrischen Isolationswiderstand bei 25°C von kleiner 10¹⁰Ω dar. Der Energiespeicher 13" kann eine Kondensatorschaltung sein.

Die Sensoranordnung 1 weist eine Sensor-Kopplungskapazität 14 auf, über welche der RFID-Transponder 13 mit dem ersten Signalleiter 11 kapazitiv gekoppelt ist.

Gemäss den beiden Ausführungsformen der Fig. 1 und 2 besteht das Messsignal M des ersten Signalleiters 11 aus Polarisationsladungen. Die Sensor-Kopplungskapazität 14 verhindert, dass Polarisationsladungen vom hochohmigen ersten Signalleiter 11 zum mittelhochohmigen Energiespeicher 13" fliessen.

Gemäss den beiden Ausführungsformen der Fig. 3 und 4 besteht das Messsignal M des ersten Signalleiters 11 aus einer elektrischen Spannung. Die Sensor-Kopplungskapazität 14 verhindert einen Verlust der elektrischen Spannung, indem vom hochohmigen ersten Signalleiter 11 ein elektrischer Strom zum mittelhochohmigen Energiespeicher 13" fliesst.

### DIE KABELANORDUNG

Die Kabelanordnung 2 hat die Funktion, das Messignal M zur Verstärkeranordnung 3 abzuleiten. Die Kabelanordnung 2 weist einen Kabelmantel 25 auf. Der Kabelmantel 25 ist figürlich schematisch als gestricheltes Rechteck dargestellt. Die Gegenstände innerhalb des Kabelmantels 25 sind Bestandteil der Kabelanordnung 2. Die Kabelanordnung 2 kann eine Länge von bis zu 100m haben.

Die Kabelanordnung 2 weist einen zweiten Signalleiter 21 und einen zweiten Masseleiter 22 auf. Der zweite Signalleiter 21 und der zweite Masseleiter 22 sind aus elektrisch leitendem Material wie Kupfer, Stahl, usw.

Der zweite Signalleiter 21 kann über ein figürlich nicht dargestelltes Verbindungsmittel wie eine Durchführung, ein Stecker, usw. mit dem ersten Signalleiter 21 elektrisch verbunden sein und leitet das Messsignal M in der Kabelanordnung 2 ab. Auch der zweite Masseleiter 22 kann über ein figürlich nicht dargestelltes Verbindungsmittel wie eine Klemme, ein Stecker, usw. mit dem ersten Masseleiter 12 elektrisch verbunden sein.

Für ein möglichst verlustfreies Ableiten des Messsignals M ist der zweite Signalleiter 21 hochohmig elektrisch isoliert. Vorzugsweise ist der elektrische Isolationswiderstand des zweiten Signalleiters 21 bei 25°C grösser 10¹³Ω. Der zweite Masseleiter 22 liegt auf dem elektrischen Bezugspotenzial der Messvorrichtung 100. Im Regelfall ist das elektrische Bezugspotenzial eine elektrische Spannung von 0V.

Die Kabelanordnung 2 ist ein Zweileiter-Kabel. Vorzugsweise ist die Kabelanordnung 2 als Koaxialkabel ausgebildet, mit dem zweiten Signalleiter 21 als Innenleiter und mit dem zweiten Masseleiter 22 als Aussenleiter, welcher Aussenleiter den Innenleiter konzentrisch umgibt. Der Innenleiter ist vom Aussenleiter hochohmig elektrisch isoliert. Die Impedanz des Koaxialkabels beträgt 50Ω.

Die Kabelanordnung 2 weist einen weiteren RFID-Transponder 23 auf. Der weitere RFID-Transponder 23 ist mit dem zweiten Signalleiter 21 und mit dem zweiten Masseleiter 22 elektrisch verbunden. Der weitere RFID-Transponder 23 weist einen weiteren Datenspeicher 23' auf. Aktuell kann der weitere Datenspeicher 23' eine Speicherkapazität von 8kByte haben. Die technische Entwicklung geht aber zu grösseren Speicherkapazitäten, so dass die Speicherkapazität in einigen Jahren ein Mehrfaches von 8kByte sein wird.

Im weiteren Datenspeicher 23' des weiteren RFID-Transponders 23 sind dauerhaft Daten D als kabelspezifische Daten KD der Kabelanordnung 2 gespeichert. Die kabelspezifische Daten KD umfassen mindestens eines der folgenden Datenelemente:
- ein Datenelement zur Länge der der Kabelanordnung 2;
- ein Datenelement zur Kapazität der Kabelanordnung 2;
- ein Datenelement zum Typ der Kabelanordnung 2; und
- ein Datenelement zum Verbindungstyp der Kabelanordnung 2.

Der weitere RFID-Transponder 23 weist einen weiteren Energiespeicher 23" auf, welcher hochfrequente elektrische Signale HF als elektrische Energie speichern kann. Der weitere Energiespeicher 23" ist mit dem zweiten Signalleiter 21 elektrisch verbunden. Hochfrequente elektrische Signale HF, welche in den zweiten Signalleiter 21 eingespeist sind, können kapazitiv in den weiteren Energiespeicher 23" koppeln. Im nicht geladenen Zustand stellt der weitere Energiespeicher 23" eine mittelhochohmige Last mit einem elektrischen Isolationswiderstand bei 25°C von kleiner 10¹⁰Ω dar. Der weitere Energiespeicher 23" kann eine Kondensatorschaltung sein.

Die Kabelanordnung 2 weist eine Kabel-Kopplungskapazität 24 auf, über welche der weitere RFID-Transponder 23 mit dem zweiten Signalleiter 21 kapazitiv gekoppelt ist.

Gemäss der Ausführungsform der Fig. 2 besteht das Messsignal M des zweiten Signalleiters 21 aus Polarisationsladungen. Die Kabel-Kopplungskapazität 24 verhindert, dass Polarisationsladungen vom hochohmigen zweiten Signalleiter 21 zum mittelhochohmigen weiteren Energiespeicher 23'' fliessen.

Gemäss der Ausführungsform der Fig. 4 besteht das Messsignal M des zweiten Signalleiters 21 aus einer elektrischen Spannung. Die Kabel-Kopplungskapazität 24 verhindert einen Verlust der elektrischen Spannung, indem vom hochohmigen zweiten Signalleiter 21 ein elektrischer Strom zum mittelhochohmigen weiteren Energiespeicher 23" fliesst.

### DIE VERSTÄRKERANORDNUNG

Die Verstärkeranordnung 3 hat die Funktion, das Messsignal M zu einem Messwert V zu verstärken. Die Verstärkeranordnung 3 weist ein Verstärkergehäuse 35 auf. Das Verstärkergehäuse 35 ist figürlich schematisch als gestricheltes Rechteck dargestellt. Die Gegenstände innerhalb des Verstärkergehäuses 35 sind Bestandteil der Verstärkeranordnung 3. Das Verstärkergehäuse 35 ist aus mechanisch beständigem Material wie Stahl, usw.

Die Verstärkeranordnung 3 weist einen dritten Signalleiter 31 und einen dritten Masseleiter 32 auf. Der dritte Signalleiter 31 und der dritte Masseleiter 32 sind aus elektrisch leitendem Material wie Kupfer, Stahl, usw.

Gemäss den beiden Ausführungsformen der Fig. 1 und 3 ist der dritte Signalleiter 31 mit dem ersten Signalleiter 11 elektrisch verbunden. Gemäss den beiden Ausführungsformen der Fig. 2 und 4 ist der dritte Signalleiter 31 mit dem zweiten Signalleiter 21 elektrisch verbunden. Der dritte Signalleiter 31 kann über ein figürlich nicht dargestelltes Verbindungsmittel wie eine Durchführung, ein Stecker, usw. mit dem ersten Signalleiter 11 oder dem zweiten Signalleiter 21 elektrisch verbunden sein und leitet das Messsignal M innerhalb des Verstärkergehäuses 35 ab. Der erste Signalleiter 11, zweite Signalleiter 21 und dritte Signalleiter 31 werden auch einfach Signalleiter 11, 21, 31 genannt. Auch der dritte Masseleiter 32 kann über ein figürlich nicht dargestelltes Verbindungsmittel wie eine Klemme, ein Stecker, usw. mit dem ersten Masseleiter 12 oder mit dem zweiten Masseleiter 22 elektrisch verbunden sein.

Für ein möglichst verlustfreies Ableiten des Messsignals M ist der dritte Signalleiter 31 hochohmig elektrisch isoliert. Vorzugsweise ist der elektrische Isolationswiderstand des dritten Signalleiters 31 bei 25°C grösser 10¹³Ω. Der dritte Masseleiter 32 liegt auf dem elektrischen Bezugspotenzial der Messvorrichtung 100. Im Regelfall ist das elektrische Bezugspotenzial eine elektrische Spannung von 0V.

Gemäss den beiden Ausführungsformen der Fig. 1 und 2 weist die Verstärkeranordnung 3 einen Operationsverstärker 30 und eine Rückkopplungskapazität 36 auf. Der Operationsverstärker 30 weist einen invertierenden Eingang -, einen nichtinvertierenden Eingang + und einen Ausgang 38 auf. Der dritte Signalleiter 31 ist mit dem invertierenden Eingang - elektrisch verbunden und leitet das Messsignal M zum invertierenden Eingang -. Die Rückkopplungskapazität 36 ist parallel zum invertierenden Eingang - und zum Ausgang 38 des Operationsverstärkers 30 angeordnet. Die Rückkopplungskapazität 36 hat die Funktion eines Integrators. Das Messsignal M besteht aus Polarisationsladungen. Damit die Polarisationsladungen möglichst verlustfrei in die Rückkopplungskapazität 36 fliessen, weist der invertierende Eingang - einen hochohmigen elektrischen Eingangswiderstand von 10¹⁴Ω auf. Der Operationsverstärker 30 und die Rückkopplungskapazität 36 bilden einen Ladungsverstärker, welcher das Messsignal M in einen Messwert V verstärkt. Die Grösse der Rückkopplungskapazität 36 ist einstellbar. Je nach Grösse der Rückkopplungskapazität 36 weist die Verstärkung einen Faktor von 10¹, 10², 10³, 10⁴, usw. auf. Der Messwert V ist eine elektrische Spannung. Der dritte Masseleiter 32 ist mit dem nichtinvertierenden Eingang + elektrisch verbunden.

Die Verstärkeranordnung 3 der beiden Ausführungsformen gemäss der Fig. 1 und 2 kann einen elektrischen Entladewiderstand 37 aufweisen, welcher parallel zum invertierenden Eingang des Operationsverstärkers 30 und zum Ausgang 38 des Operationsverstärkers 30 angeordnet ist. Der elektrische Entladewiderstand 37 entlädt die Rückkopplungskapazität 36 kontinuierlich, damit diese nicht nach einiger Zeit durch Fehlerströme in Übersteuerung kommt, welche Fehlerströme insbesondere bei quasistatischen Messungen aufgrund der nur endlich hohen hochohmigen elektrischen Isolation der Signalleiter 11, 21, 31 auftreten.

Gemäss den beiden Ausführungsformen der Fig. 3 und 4 weist die Verstärkeranordnung 3 einen Operationsverstärker 30 auf. Der Operationsverstärker 30 weist einen invertierenden Eingang -, einen nichtinvertierenden Eingang + und einen Ausgang 38 auf. Der dritte Signalleiter 31 ist mit dem nichtinvertierenden Eingang + elektrisch verbunden und leitet das Messsignal M zum nichtinvertierenden Eingang +. Das Messsignal M ist eine elektrische Spannung. Der Operationsverstärker 30 verstärkt die elektrische Spannung in einen Messwert V. Auch der Messwert V ist eine elektrische Spannung. Für eine möglichst verlustfrei Verstärkung der elektrischen Spannung soll über den dritten Signalleiter 31 kein elektrischer Strom in den nichtinvertierenden Eingang + fliessen. Deshalb weist der nichtinvertierende Eingang + einen hochohmigen elektrischen Eingangswiderstand von 10¹⁴Ω auf. Der Operationsverstärker 30 verstärkt die elektrische Spannung mit einstellbaren Faktor von 10¹, 10², 10³, 10⁴, usw. Der dritte Masseleiter 32 ist mit dem invertierenden Eingang - elektrisch verbunden.

Die Verstärkeranordnung 3 weist eine RFID-Schreib-/Lesevorrichtung 33 auf. Die RFID-Schreib-/Lesevorrichtung 33 ist mit dem dritten Signalleiter 31 und mit dem dritten Masseleiter 32 elektrisch verbunden. Die RFID-Schreib-/Lesevorrichtung 33 ist mit einer figürlich nicht dargestellten elektrischen Energieversorgung verbunden. Die RFID-Schreib-/Lesevorrichtung 33 ist ausgebildet, über den Signalleiter 11, 21, 31 Daten D in den RFID-Transponder 13 zu schreiben und aus dem RFID-Transponder 13 zu lesen. Die RFID-Schreib-/Lesevorrichtung 33 ist ausgebildet, über den Signalleiter 11, 21, 31 Daten D in den weiteren RFID-Transponder e3 zu schreiben und aus dem weiteren RFID-Transponder 23 zu lesen.

Die RFID-Schreib-/Lesevorrichtung 33 weist eine elektrische Generatorschaltung 33' auf, welche hochfrequente elektrische Signale HF erzeugt. Typischerweise beträgt die Frequenz der hochfrequenten elektrischen Signale HF 13.56MHz. Die elektrische Generatorschaltung 33' stellt eine mittelhochohmige Last mit einem elektrischen Isolationswiderstand bei 25°C von kleiner 10¹⁰Ω dar.

Die Verstärkeranordnung 3 weist eine Verstärker-Kopplungskapazität 34 auf, über welche die RFID-Schreib-/Lesevorrichtung 33 mit dem dritten Signalleiter 31 kapazitiv gekoppelt ist.

Gemäss den beiden Ausführungsformen der Fig. 1 und 2 besteht das Messsignal M des dritten Signalleiters 31 aus Polarisationsladungen. Die Verstärker-Kopplungskapazität 34 verhindert, dass Polarisationsladungen vom hochohmigen dritten Signalleiter 31 zur mittelhochohmigen elektrischen Generatorschaltung 33' fliessen.

Gemäss den beiden Ausführungsformen der Fig. 3 und 4 besteht das Messsignal M des dritten Signalleiters 31 aus einer elektrischen Spannung. Die Verstärker-Kopplungskapazität 34 verhindert einen Verlust der elektrischen Spannung, indem vom hochohmigen dritten Signalleiter 31 ein elektrischer Strom zur mittelhochohmigen elektrischen Generatorschaltung 33' fliesst.

Die elektrische Generatorschaltung 33' ist mit dem dritten Signalleiter 31 elektrisch verbunden und speist die hochfrequenten elektrischen Signale HF in den dritten Signalleiter 31 ein. Gemäss den beiden Ausführungsformen der Fig. 1 und 3 gelangen die hochfrequenten elektrischen Signale HF vom dritten Signalleiter 31 zum mit dem dritten Signalleiter 31 elektrisch verbundenen ersten Signalleiter 11. Gemäss den beiden Ausführungsformen der Fig. 2 und 4 gelangen die hochfrequenten elektrischen Signale HF vom dritten Signalleiter 31 zum mit dem dritten Signalleiter 31 elektrisch verbundenen zweiten Signalleiter 21 sowie zum mit dem zweiten Signalleiter 21 elektrisch verbundenen ersten Signalleiter 11.

Sobald hochfrequente elektrische Signale HF in den ersten Signalleiter 11 gelangen, koppeln sie kapazitiv mit dem Energiespeicher 13" des RFID-Transponders 13 und werden im Energiespeicher 13" gespeichert. Somit wird der RFID-Transponder 13 mit elektrischer Energie versorgt.

Sobald hochfrequente elektrische Signale HF in den zweiten Signalleiter 21 gelangen, koppeln sie kapazitiv mit dem weiteren Energiespeicher 23" des weiteren RFID-Transponders 23 und werden im weiteren Energiespeicher 23" gespeichert. Somit wird der weitere RFID-Transponder 23 mit elektrischer Energie versorgt.

Die RFID-Schreib-/Lesevorrichtung 33 weist eine elektrische Modulations-/Demodulationsschaltung 33" auf. Die elektrische Modulations-/Demodulationsschaltung 33" ist mit dem dritten Signalleiter 31 elektrisch verbunden. Die Modulations-/Demodulationsschaltung 33" hat die Funktion, Daten D in den dritten Signalleiter 31 einzuspeisen und Daten D dem dritten Signalleiter 31 zu entnehmen. Die elektrische Modulations-/Demodulationsschaltung 33" ist ausgebildet, den hochfrequenten elektrischen Signale HF des dritten Signalleiters 31 Daten D aufzumodulieren. Die Modulation kann eine Amplitudenmodulation oder eine Phasenmodulation sein. Die Modulation erfolgt nach einem Datenprotokoll. Gemäss den vier Ausführungsformen der Fig. 1 bis 4 übermitteln die hochfrequenten elektrischen Signale HF die aufmodulierten Daten D vom dritten Signalleiter 31 zum ersten Signalleiter 11. Gemäss den beiden Ausführungsformen der Fig. 2 und 4 übermitteln die hochfrequenten elektrischen Signale HF die aufmodulierten Daten D vom dritten Signalleiter 31 zum zweiten Signalleiter 21.

Der RFID-Transponder 13 weist eine elektrische Demodulations-/Modulationsschaltung 13‴ auf. Die elektrische Demodulations-/Modulationsschaltung 13‴ ist mit dem ersten Signalleiter 11 elektrisch verbunden. Bei Versorgung des RFID-Transponders 13 mit elektrischer Energie wird die elektrische Demodulations-/Modulationsschaltung 13‴ automatisch aktiviert. Die aktivierte Demodulations-/Modulationsschaltung 13‴ hat die Funktion, dem ersten Signalleiter 11 Daten D zu entnehmen und Daten D in den ersten Signalleiter 11 einzuspeisen. Die aktivierte elektrische Demodulations-/Modulationsschaltung 13‴ ist ausgebildet, den hochfrequenten elektrischen Signale HF im ersten Signalleiter 11 die aufmodulierten Daten zu entnehmen. Die Demodulation erfolgt nach dem gleichen Datenprotokoll wie die Modulation. Die Daten D können Befehle der RFID-Schreib-/Lesevorrichtung 33 sein, welche vom RFID-Transponder 13 auszuführen sind. Die Daten D sensorspezifische Daten SD sein, welche der RFID-Transponder 13 im Datenspeicher 13' speichert.

Der weitere RFID-Transponder 23 weist eine weitere elektrische Demodulations-/Modulationsschaltung 23‴ auf. Die weitere elektrische Demodulations-/Modulationsschaltung 23‴ ist mit dem zweiten Signalleiter 21 elektrisch verbunden. Bei Versorgung des weiteren RFID-Transponders 23 mit elektrischer Energie wird die weitere elektrische Demodulations-/Modulationsschaltung 23‴ automatisch aktiviert. Die aktivierte weitere Demodulations-/Modulationsschaltung 23‴ hat die Funktion, Daten D dem zweiten Signalleiter 21 zu entnehmen und Daten D in den zweiten Signalleiter 21 einzuspeisen. Die aktivierte weitere elektrische Demodulations-/Modulationsschaltung 23‴ ist ausgebildet, den hochfrequenten elektrischen Signalen HF im zweiten Signalleiter 21 die aufmodulierten Daten D zu entnehmen. Die Demodulation erfolgt nach dem gleichen Datenprotokoll wie die Modulation. Die Daten D können Befehle der RFID-Schreib-/Lesevorrichtung 33 sein, welche vom weiteren RFID-Transponder 23 auszuführen sind. Die Daten D können kabelspezifische Daten KD sein, welche der weitere RFID-Transponder 23 im weiteren Datenspeicher 23' speichert.

Die aktivierte elektrische Demodulations-/Modulationsschaltung 13‴ ist ausgebildet, für Befehle sensorspezifische Daten SD aus dem Datenspeicher 13' auszulesen. Die aktivierte elektrische Demodulations-/Modulationsschaltung 13‴ ist ausgebildet, den hochfrequenten elektrischen Signalen HF des ersten Signalleiters 11 die ausgelesenen sensorspezifischen Daten SD aufzumodulieren. Die Modulation kann eine Amplitudenmodulation oder eine Phasenmodulation sein. Die Modulation erfolgt nach dem Datenprotokoll. Gemäss den vier Ausführungsformen der Fig. 1 bis 4 übermitteln die hochfrequenten elektrischen Signale HF mit der Modulation die sensorspezifischen Daten SD vom ersten Signalleiter 11 zum dritten Signalleiter 31.

Die aktivierte weitere elektrische Demodulations-/Modulationsschaltung 23‴ ist ausgebildet, für Befehle kabelspezifische Daten KD aus dem Datenspeicher 13' auszulesen. Die aktivierte weitere elektrische Demodulations-/Modulationsschaltung 23‴ ist ausgebildet, den hochfrequenten elektrischen Signalen HF des zweiten Signalleiters 21 die ausgelesenen kabelspezifischen Daten KD aufzumodulieren. Die Modulation kann eine Amplitudenmodulation oder eine Phasenmodulation sein. Die Modulation erfolgt nach dem Datenprotokoll. Gemäss den beiden Ausführungsformen der Fig. 2 und 4 übermitteln die hochfrequenten elektrischen Signale HF mit der Modulation die kabelspezifischen Daten KD vom zweiten Signalleiter 21 zum dritten Signalleiter 31.

Die elektrische Modulations-/Demodulationsschaltung 31" ist ausgebildet, die Modulation der hochfrequenten elektrischen Signale HF im dritten Signalleiter 31 zu demodulieren. Die Demodulation erfolgt nach dem gleichen Datenprotokoll wie die Modulation. Mit der Demodulation entnimmt die elektrische Modulations-/Demodulationsschaltung 31" den hochfrequenten elektrischen Signalen HF die sensorspezifischen Daten SD und/oder die kabelspezifischen Daten KD sein.

Die RFID-Schreib-/Lesevorrichtung 33 weist mindestens einen Datenleiter 39 auf. Der Datenleiter 39 ist aus elektrisch leitendem Material wie Kupfer, Gold, usw. Auf dem Datenleiter 39 übermittelt die RFID-Schreib-/Lesevorrichtung 33 die sensorspezifischen Daten SD und/oder die kabelspezifischen Daten KD.

### DIE AUSWERTEANORDNUNG

Die Auswerteanordnung 4 hat die Funktion, den Messwert V auszuwerten. Dazu verwendet die Auswerteanordnung 4 sensorspezifische Daten SD sowie kabelspezifische Daten KD. Die Auswerteanordnung 4 ist figürlich schematisch als gestricheltes Rechteck dargestellt.

Die Auswerteanordnung 4 weist eine Datenerfassungs- und Auswerteeinheit 40 auf. Die Datenerfassungs- und Auswerteeinheit 40 kann ein Computer mit einem Prozessor, einem Datenspeicher 40' sowie Eingabe- und Ausgabemitteln sein. Die Datenerfassungs- und Auswerteeinheit 40 weist einen Eingang 48, mindestens einen weiteren Datenleiter 49 und ein viertes Masseleiter 42 auf. Der Eingang 48, der weitere Datenleiter 49 und das vierte Masseleiter 42 sind aus elektrisch leitendem Material wie Kupfer, Stahl, usw.

Der Eingang 48 kann über ein figürlich nicht dargestelltes Verbindungsmittel wie eine Durchführung, ein Stecker, das Internet, usw. mit dem Ausgang 38 elektrisch verbunden sein und die Datenerfassungs- und Auswerteeinheit 40 empfängt über den Eingang 48 den Messwert V.

Das vierte Masseleiter 42 kann über ein figürlich nicht dargestelltes Verbindungsmittel wie eine Klemme, ein Stecker, das Internet, usw. mit dem dritten Masseleiter 32 elektrisch verbunden sein.

Der weitere Datenleiter 49 kann über ein figürlich nicht dargestelltes Verbindungsmittel wie eine Durchführung, ein Stecker, das Internet, usw. mit dem Datenleiter 39 elektrisch verbunden sein und die Datenerfassungs- und Auswerteeinheit 40 empfängt über den weiteren Datenleiter 49 sensorspezifische Daten SD und/oder kabelspezifische Daten KD.

Die Datenerfassungs- und Auswerteeinheit 40 verfügt somit über die sensorspezifischen Daten SD und/oder kabelspezifischen Daten KD und kann die sensorspezifischen Daten SD und/oder kabelspezifischen Daten KD im Datenspeicher 40' speichern.

### Bezugszeichenliste

- 1: Sensoranordnung
- 10: PE-Sensorelement
- 10*: DMS-Schaltungseinheit
- 10.1: erster DMS
- 10.2: zweiter DMS
- 10.3: dritter DMS
- 10.4: vierter DMS
- 10.5: DMS-Spannungsversorgungseinheit
- 10.6: erster DMS-Ausgleichswiderstand
- 10.7: zweiter DMS-Ausgleichswiderstand
- 10': erster Knoten
- 10": zweiter Knoten
- 10‴: dritter Knoten
- 10ʺʺ: vierter Knoten
- 11: erster Signalleiter
- 12: erster Masseleiter
- 13: RFID-Transponder
- 13': Datenspeicher
- 13": Energiespeicher
- 13‴: elektrische Demodulations-/Modulationsschaltung
- 14: Sensor-Kopplungskapazität
- 15: Sensorgehäuse
- 2: Kabelanordnung
- 21: zweiter Signalleiter
- 22: zweiter Masseleiter
- 23: weiterer RFID-Transponder
- 23': weiterer Datenspeicher
- 23": weiterer Energiespeicher
- 23‴: weitere elektrische Demodulations-/Modulationsschaltung
- 24: Kabel-Kopplungskapazität
- 25: Kabelmantel
- 3: Verstärkeranordnung
- 30: Operationsverstärker
- 31: dritter Signalleiter
- 32: dritter Masseleiter
- 33: RFID-Schreib-/Lesevorrichtung
- 33': elektrische Generatorschaltung
- 33": elektrische Modulations-/Demodulationsschaltung
- 34: Verstärker-Kopplungskapazität
- 35: Verstärkergehäuse
- 36: Rückkopplungskapazität
- 37: elektrischer Entladewiderstand
- 38: Ausgang
- 39: Datenleiter
- 4: Auswerteanordnung
- 40: Datenerfassungs- und Auswerteeinheit
- 40': Datenspeicher
- 42: viertes Masseleiter
- 48: Eingang
- 49: weiterer Datenleiter
- 100: Messvorrichtung
- -: invertierender Eingang
- +: nichtinvertierende Eingang
- D: Daten
- HF: hochfrequente elektrische Signale
- KD: kabelspezifische Daten
- M: Messsignal
- SD: sensorspezifische Daten
- V: Messwert

## Patentansprüche

1. Messvorrichtung (100) zum Messen einer physikalischen Grösse, welche eine Sensoranordnung (1) und eine Verstärkeranordnung (3) aufweist; die Sensoranordnung (1) erzeugt unter der Wirkung der zu messenden physikalischen Grösse ein Messsignal (M), welches Messsignal (M) über mindestens einen Signalleiter (11, 21, 31) an die Verstärkeranordnung (3) abgeleitet wird und von der Verstärkeranordnung (3) zu einem Messwert (V) verstärkt wird; welche Sensoranordnung (1) einen RFID-Transponder (13) aufweist, in welchem dauerhaft Daten (D) gespeichert sind; und welche Verstärkeranordnung (3) eine RFID-Schreib-/Lesevorrichtung (33) aufweist, welche ausgebildet ist, über den Signalleiter (11, 21, 31) Daten (D) in den RFID-Transponder (13) zu schreiben und aus dem RFID-Transponder (13) zu lesen; **dadurch gekennzeichnet, dass** der RFID-Transponder (13) über den Signalleiter (11, 21, 31) kapazitiv mit der RFID-Schreib-/Lesevorrichtung (33) gekoppelt ist; dass hochfrequente elektrische Signale (HF) in den Signalleiter (11, 21, 31) eingespeist sind; und dass die Daten (D) zur Übermittlung über den Signalleiter (11, 21, 31) den hochfrequenten elektrischen Signalen (HF) aufmoduliert sind.

2. Messvorrichtung (100) gemäss Anspruch 1, **dadurch gekennzeichnet, dass** die Signalleiter (11, 21, 31) einen ersten Signalleiter (11) umfassen, welcher Bestandteil der Sensoranordnung (1) ist und welcher das Messsignal (M) ableitet; und dass die Sensoranordnung (1) eine Sensor-Kopplungskapazität (14) aufweist, über welche der RFID-Transponder (13) mit dem ersten Signalleiter (11) kapazitiv gekoppelt ist.

3. Messvorrichtung (100) gemäss einem der Ansprüche 1 oder 2, **dadurch gekennzeichnet, dass** die Signalleiter (11, 21, 31) einen ersten Signalleiter (11) umfassen, welcher Bestandteil der Sensoranordnung (1) ist und welcher das Messsignal (M) ableitet; dass die Messvorrichtung (100) eine Kabelanordnung (2) aufweist; dass die Signalleiter (11, 21, 31) einen zweiten Signalleiter (21) umfassen, welcher Bestandteil der Kabelanordnung (2) ist; dass der erste Signalleiter (11) mit dem zweiten Signalleiter (21) elektrisch verbunden ist und das Messsignal (M) ableitet; dass die Kabelanordnung (2) einen weiteren RFID-Transponder (23) aufweist, in welchem dauerhaft Daten (D) gespeichert sind; dass die RFID-Schreib-/Lesevorrichtung (33) ausgebildet ist, über den Signalleiter (11, 21, 31) Daten (D) in den weiteren RFID-Transponder (23) zu schreiben und aus dem weiteren RFID-Transponder (23) zu lesen; dass der weitere RFID-Transponder (23) über den Signalleiter (11, 21, 31) kapazitiv mit der RFID-Schreib-/Lesevorrichtung (33) gekoppelt ist; dass hochfrequente elektrische Signale (HF) in den Signalleiter (11, 21, 31) eingespeist sind; und dass die Daten (D) zur Übermittlung zwischen dem weiteren RFID-Transponder (23) und dem RFID-Schreib-/Lesevorrichtung (33) den hochfrequenten elektrischen Signale (HF) aufmoduliert sind.

4. Messvorrichtung (100) gemäss Anspruch 4, **dadurch gekennzeichnet, dass** die Kabelanordnung (2) eine Kabel-Kopplungskapazität (24) aufweist, über welche der weitere RFID-Transponder (23) mit dem zweiten Signalleiter (21) kapazitiv gekoppelt ist.

5. Messvorrichtung (100) gemäss einem der Ansprüche 1 bis 4, **dadurch gekennzeichnet, dass** die Signalleiter (11, 21, 31) einen dritten Signalleiter (31) umfassen, welcher Bestandteil der Verstärkeranordnung (3) ist und welcher das Messsignal (M) ableitet; und dass die Verstärkeranordnung (3) eine Verstärker-Kopplungskapazität (34) aufweist, über welche die RFID-Schreib-/Lesevorrichtung (33) mit dem dritten Signalleiter (31) kapazitiv gekoppelt ist.

6. Messvorrichtung (100) gemäss einem der Ansprüche 1 bis 5, **dadurch gekennzeichnet, dass** die Sensoranordnung (1) ein PE-Sensorelement (10) aufweist, welches unter der Wirkung der zu messenden physikalischen Grösse ein Messsignal (M) in Form von Polarisationsladungen erzeugt; dass die Signalleiter (11, 21, 31) einen ersten Signalleiter (11) umfassen, welcher Bestandteil der Sensoranordnung (1) ist und welcher das Messsignal (M) ableitet; dass der RFID-Transponder (13) mit dem ersten Signalleiter (11) elektrisch verbunden ist; dass die Verstärkeranordnung (3) einen Operationsverstärker (30) und eine Rückkopplungskapazität (36) aufweist, welcher Operationsverstärker (30) einen invertierenden Eingang (-) und einen Ausgang (38) aufweist und welche Rückkopplungskapazität (36) parallel zum invertierenden Eingang (-) und zum Ausgang (38) angeordnet ist; dass die Signalleiter (11, 21, 31) einen dritten Signalleiter (31) umfassen, welcher Bestandteil der Verstärkeranordnung (3) ist und welcher mit dem ersten Signalleiter (11) elektrisch verbunden ist und das Messsignal (M) zum invertierenden Eingang (-) ableitet.

7. Messvorrichtung (100) gemäss einem der Ansprüche 1 bis 5, **dadurch gekennzeichnet, dass** die Sensoranordnung (1) eine DMS-Schaltungseinheit (10*) aufweist, welche unter der Wirkung der zu messenden physikalischen Grösse ein Messsignal (M) in Form einer elektrischen Spannung erzeugt; dass die Signalleiter (11, 21, 31) einen ersten Signalleiter (11) umfassen, welcher Bestandteil der Sensoranordnung (1) ist und welcher das Messsignal (M) ableitet; dass der RFID-Transponder (13) mit dem ersten Signalleiter (11) elektrisch verbunden ist; dass die Verstärkeranordnung (3) einen Operationsverstärker (30) aufweist, welcher Operationsverstärker (30) einen nichtinvertierenden Eingang (+) aufweist; dass die Signalleiter (11, 21, 31) einen dritten Signalleiter (31) umfassen, welcher Bestandteil der Verstärkeranordnung (3) ist und welcher mit dem ersten Signalleiter (11) elektrisch verbunden ist und das Messsignal (M) zum nichtinvertierenden Eingang (+) ableitet.

8. Messvorrichtung (100) gemäss einem der Ansprüche 6 oder 7, **dadurch gekennzeichnet, dass** die RFID-Schreib-/Lesevorrichtung (33) eine elektrische Generatorschaltung (33') aufweist, welche hochfrequente elektrische Signale (HF) erzeugt; dass die elektrische Generatorschaltung (33') mit dem dritten Signalleiter (31) elektrisch verbunden ist und die hochfrequenten elektrischen Signale (HF) in den dritten Signalleiter (31) einspeist; und dass die hochfrequenten elektrischen Signale (HF) vom dritten Signalleiter (31) zum mit dem dritten Signalleiter (31) elektrisch verbundenen ersten Signalleiter (11) gelangen und kapazitiv in einen Energiespeicher (13") des RFID-Transponders (13) koppeln.

9. Messvorrichtung (100) gemäss Anspruch 8, **dadurch gekennzeichnet, dass** die RFID-Schreib-/Lesevorrichtung (33) eine elektrische Modulations-/Demodulationsschaltung (33") aufweist, welche mit dem dritten Signalleiter (31) elektrisch verbunden ist; dass die elektrische Modulations-/Demodulationsschaltung (33") ausgebildet ist, den hochfrequenten elektrischen Signalen (HF) des dritten Signalleiters (31) Daten (D) aufzumodulieren; dass die hochfrequenten elektrischen Signale (HF) die aufmodulierten Daten (D) vom dritten Signalleiter (31) zum ersten Signalleiter (11) übermitteln; dass der RFID-Transponder (13) eine elektrische Demodulations-/Modulationsschaltung (13‴) aufweist, welche mit dem ersten Signalleiter (11) elektrisch verbunden ist; und dass die aktivierte elektrische Demodulations-/Modulationsschaltung (13‴) ausgebildet ist, den hochfrequenten elektrischen Signalen (HF) im ersten Signalleiter (11) die aufmodulierten Daten (D) zu entnehmen, welche Daten (D) Befehle der RFID-Schreib-/Lesevorrichtung (33) sind, welche vom RFID-Transponder (13) auszuführen sind oder welche Daten (D) sensorspezifische Daten (SD) sind, welche der RFID-Transponder (13) speichert.

10. Messvorrichtung (100) gemäss Anspruch 9, **dadurch gekennzeichnet, dass** die aktivierte elektrische Demodulations-/Modulationsschaltung (13‴) ausgebildet ist, für Befehle den hochfrequenten elektrischen Signalen (HF) des ersten Signalleiters (11) sensorspezifische Daten (SD) aufzumodulieren; dass die hochfrequenten elektrischen Signale (HF) die aufmodulierten sensorspezifischen Daten (SD) vom ersten Signalleiter (11) zum dritten Signalleiter (31) übermitteln; und dass die elektrische Modulations-/Demodulationsschaltung (31'') ausgebildet ist, den hochfrequenten elektrischen Signalen (HF) im dritten Signalleiter (31) die aufmodulierten sensorspezifischen Daten (SD) zu entnehmen.

11. Messvorrichtung (100) gemäss einem der Ansprüche 6 oder 7, **dadurch gekennzeichnet, dass** die RFID-Schreib-/Lesevorrichtung (33) eine elektrische Generatorschaltung (33') aufweist, welche hochfrequente Signale (HF) erzeugt; dass die elektrische Generatorschaltung (33') mit dem dritten Signalleiter (31) elektrisch verbunden ist und die hochfrequente elektrischen Signale (HF) in den dritten Signalleiter (31) einspeist; und dass die hochfrequenten elektrischen Signale (HF) vom dritten Signalleiter (31) zum mit dem dritten Signalleiter (31) elektrisch verbundenen zweiten Signalleiter (21) gelangen und kapazitiv in einen weiteren Energiespeicher (23") des weiteren RFID-Transponders (23) koppeln.

12. Messvorrichtung (100) gemäss Anspruch 10, **dadurch gekennzeichnet, dass** die RFID-Schreib-/Lesevorrichtung (33) eine elektrische Modulations-/Demodulationsschaltung (33") aufweist, welche mit dem dritten Signalleiter (31) elektrisch verbunden ist; dass die elektrische Modulations-/Demodulationsschaltung (33") ausgebildet ist, den hochfrequenten elektrischen Signalen (HF) des dritten Signalleiters (31) Daten (D) aufzumodulieren; dass die hochfrequenten elektrischen Signale (HF) die aufmodulierten Daten (D) vom dritten Signalleiter (31) zum zweiten Signalleiter (21) übermitteln; dass der weitere RFID-Transponder (23) eine weitere elektrische Demodulations-/Modulationsschaltung (23‴) aufweist, welche mit dem zweiten Signalleiter (21) elektrisch verbunden ist; und dass die aktivierte weitere elektrische Demodulations-/Modulationsschaltung (23‴) ausgebildet ist, den hochfrequenten elektrischen Signalen (HF) im zweiten Signalleiter (21) die aufmodulierten Daten (D) zu entnehmen, welche Daten (D) Befehle der RFID-Schreib-/Lesevorrichtung (33) sind, welche vom weiteren RFID-Transponder (e3) auszuführen sind oder welche Daten (D) kabelspezifische Daten (KD) sind, welche der weitere RFID-Transponder (23) speichert.

13. Messvorrichtung (100) gemäss Anspruch 11, **dadurch gekennzeichnet, dass** die aktivierte weitere elektrische Demodulations-/Modulationsschaltung (23‴) ausgebildet ist, für Befehle den hochfrequenten elektrischen Signalen (HF) des zweiten Signalleiters (21) kabelspezifische Daten (KD) aufzumodulieren; dass die hochfrequenten elektrischen Signale (HF) die aufmodulierten kabelspezifischen Daten (KD) vom zweiten Signalleiter (21) zum dritten Signalleiter (31) übermitteln; und dass die elektrische Modulations-/Demodulationsschaltung (31'') ausgebildet ist, den hochfrequenten elektrischen Signalen (HF) im dritten Signalleiter (31) die aufmodulierten kabelspezifischen Daten (KD) zu entnehmen.

14. Messvorrichtung (100) gemäss einem der Ansprüche 1 bis 13, **dadurch gekennzeichnet, dass** die RFID-Schreib-/Lesevorrichtung (33) mindestens einen Datenleiter (39) aufweist, über welchen Datenleiter (39) die RFID-Schreib-/Lesevorrichtung (33) sensorspezifische Daten (SD) und/oder kabelspezifische Daten (KD) ableitet; dass die Messvorrichtung (100) eine Auswerteanordnung (4) aufweist, welche mindestens einen weiteren Datenleiter (49) aufweist; und dass der weitere Datenleiter (49) mit dem Datenleiter (39) elektrisch verbunden ist und über den weitere Datenleiter (49) sensorspezifische Daten (SD) und/oder kabelspezifische Daten (KD) empfängt.

15. Messvorrichtung (100) gemäss Anspruch 14, **dadurch gekennzeichnet, dass** die Daten (D) sensorspezifische Daten (SD) sind, welche mindestens eines der folgenden Datenelemente umfasst:
- ein Datenelement zur Seriennummer der Sensoranordnung (1);
- ein Datenelement zur Typenbezeichnung der Sensoranordnung (1) ;
- ein Datenelement zu mindestens einen Messbereich, in dem die Sensoranordnung (1) die physikalische Grösse misst;
- ein Datenelement zur Empfindlichkeit, mit der die Sensoranordnung (1) die physikalische Grösse im mindestens einen Messbereich misst;
- ein Datenelement zur Linearitätsabweichung einschliesslich der Hysterese, mit welcher die Sensoranordnung (1) die physikalische Grösse misst; und
- ein Datenelement zum Kalibrieren der Sensoranordnung (1), wo für den mindestens einen Messbereich die dort herrschende kleinste Messungenauigkeit dokumentiert ist.

16. Messvorrichtung (100) gemäss Anspruch 14, **dadurch gekennzeichnet, dass** die Daten (D) kabelspezifische Daten (KD) sind, welche mindestens eines der folgenden Datenelemente umfasst:
- ein Datenelement zur Länge der der Kabelanordnung (2);
- ein Datenelement zur Kapazität der Kabelanordnung (2);
- ein Datenelement zum Typ der Kabelanordnung (2); und
- ein Datenelement zum Verbindungstyp der Kabelanordnung (2) .
